# EUROPÄISCHE PATENTANMELDUNG

(11) **EP 4 625 719 A1**
(43) Veröffentlichungstag der Anmeldung: **01.10.2025**
(21) Anmeldenummer: 25164432.4
(22) Anmeldetag: 18.03.2025
(51) Int. Cl.: H01R 13/502, B60L 53/16, H01R 13/52, H01R 13/56

(54) **WASSERRESISTENTER LADESTECKVERBINDER**

(30) Priorität: 26.03.2024 DE 102024108577
(71) Anmelder: HARTING Automotive GmbH, 32339 Espelkamp (DE)
(72) Erfinder: Frerking, Malte, 32339 Espelkamp (DE); Kipp, Tobias, 32339 Espelkamp (DE); Beimdieck, Carsten, 32339 Espelkamp (DE)
(74) Vertreter: Eisenführ Speiser

(57) **Zusammenfassung**

Die vorliegende Erfindung eröffnet einen Ladesteckverbinder für zumindest teilweise elektrisch betriebene Fahrzeuge. Der Ladesteckverbinder weist ein Gehäuse auf, welches zumindest zwei Gehäuseelemente besitzt, eine Verbindungsschale und eine Eingriffschale. Weiterhin nimmt das Gehäuse zumindest zwei mit jeweils einer Ladeleitung einer Leitung verbundene Ladekontakte auf. Erfindungsgemäß ist dabei zumindest der Verbindungsschale eine Verbindungsform angeordnet, welche zusätzlich als Ablaufform ausgeführt ist.

## Beschreibung

Die Erfindung geht aus von einem wasserresistenten Ladesteckverbinder nach der Gattung des unabhängigen Anspruchs 1.

Weiterhin geht die Erfindung aus von einem Verbindungssystems aufweisend einen wasserresistenten Ladesteckverbinder.

Schließlich geht die Erfindung aus von einem Ladesystem aufweisend einen wasserresistenten Ladesteckverbinder.

Derartige Ladesteckverbinder werden benötigt, um Fahrzeuge mit elektrischem Antrieb, beziehungsweise deren elektrischen Energiespeicher zu laden. Da ein Ladevorgang bei jeder Witterung erfolgen muss, ergibt es Sinn, einen elektrischen Ladesteckverbinder derart zu gestalten, dass Fremdmedien, insbesondere Wasser, nicht in das innere des Ladesteckverbinders eindringen, beziehungsweise mit dem Innenleben des Ladesteckverbinders in Kontakt kommen kann.

### Stand der Technik

Ladesteckverbinder sind im Stand der Technik in vielen verschiedenen Varianten bekannt.

Die DE 10 2012 024 588 A1 offenbart einen Ladesteckverbinder, welcher zur erhöhten Dichtigkeit gegenüber Fremdmedien, wie Staub und Wasser, mit Dichtungselementen im Steckbereich, besonders im Bereich der Kontaktelemente versehen ist.

Derartige Ladesteckerbinder sind üblicherweise zumindest zweiteilig ausgeführt, um das Innenleben, also Isolierkörper, Kontaktelemente und die damit verbundenen Kabel in sinnvoller Weise zwecks Montage, Wartung und/oder Reparatur erreichen zu können.

Nachteilig an im Stand der Technik bekannten Ladesteckverbindern ist, dass üblicherweise die Schalen eines Gehäuses mit Eingriffsformen, häufig Nut und Feder versehen sind. Die grundsätzlich clevere Verbindungsart bringt den Nachteil mit sich, dass keine ausreichende Dichtigkeit, insbesondere in Bezug auf Fremdliquide, insbesondere Spritzwasser und/ oder Regenwasser vorliegt. Um diesen Nachteil zu beheben, werden oft elastische Dichtungselemente, zumeist Gummidichtungen, eingesetzt, um eine verbesserte Dichtigkeit zu erreichen. Diese Dichtungen müssen jedoch speziell angefertigt werden und können bei fehlerhaften Montage ihren Zweck verfehlen.

### Aufgabenstellung

Die Aufgabe der Erfindung besteht darin, einen wasserresistenten Ladesteckverbinder anzubieten, welcher günstig herzustellen und dennoch zuverlässig herstellbar und einsetzbar ist.

Eine weitere Aufgabe der Erfindung ist es, ein Verbindungssystem mit einem wasserresistenten Ladesteckverbinder anzubieten.

Schließlich besteht eine Aufgabe der Erfindung darin, ein Ladesystem mit einem wasserresistenten Ladesteckverbinder anzubieten.

Die Aufgabe wird durch den Gegenstand des unabhängigen Anspruchs 1 gelöst.

Dadurch bietet die vorliegende Erfindung folgende Vorteile: Verbessern der Dichtigkeit des Ladesteckers gegenüber insbesondere Wasser mit Hilfe eines definierten Wasserablaufes, im Folgenden Ablaufform, ohne zusätzliche, Dichtungselemente.

Vorteilhafte Ausgestaltungen der Erfindung sind in den Unteransprüchen und der folgenden Beschreibung angegeben.

Die vorliegende Erfindung eröffnet einen Ladesteckverbinder für zumindest teilweise elektrisch betriebene Fahrzeuge. Der Ladesteckverbinder weist ein Gehäuse auf, welches zumindest zwei Gehäuseelemente besitzt, eine Verbindungsschale und eine Eingriffschale. Weiterhin nimmt das Gehäuse zumindest zwei mit jeweils einer Ladeleitung einer Leitung verbundene Ladekontakte auf. Erfindungsgemäß ist dabei zumindest der Verbindungsschale eine Verbindungsform angeordnet, welche zusätzlich als Ablaufform ausgeführt ist.

Als Ladesteckverbinder ist ein Steckverbinder zur Verbindung eines Energiespeichers mit einem weiteren Energiespeicher und/ oder einer Energiequelle gemeint. Besonders ist als Ladesteckverbinder ein Ladestecker zum elektrischen Anschluss mit Fahrzeugen gemeint, welche mit elektrischem Energiespeicher, also einer Batterie und/oder einem Akkumulator ausgerüstet sind. Darunter sind besonders sogenannte Plug-In-Hybridfahrzeuge und vollelektrisch angetriebene Personenfahrzeuge zu verstehen.

Um derartige Ladestecker sinnvoll montieren und warten zu können, werden üblicherweise Gehäuse, eingesetzt, welche aus zumindest zwei Halbschalen gebildet sind. Hierbei sei darauf verwiesen, dass die Begriffe Verbindungsschale und Eingriffschale im wesentlichen Synonym verwendet werden können und lediglich zur verbesserten Lesbarkeit verwendet werden. Demnach kann die erfindungsgemäße Ablaufform ebenso und/ oder alternativ an der Eingriffschale angeordnet sein.

Als Ladeleitung sei in diesem Zusammenhang eine elektrische Leitung gemeint, welche zur Übertragung hoher Ströme zum Laden eines elektrischen Energiespeichers vorgesehen ist, zu verstehen. Ein Ladekabel besteht dabei üblicherweise aus zumindest drei Ladeleitungen. Eine Ladeleitung wird im Ladesteckverbinder üblicherweise mit einem Ladekontakt oder einem Verbindungskontakt zu einem Ladekontakt abgeschlossen.

Als Verbindungsform ist vorzugsweise zumindest ein Vorsprung an oder in der Verbindungsschale gemeint, welche die Befestigung mit einer Eingriffschale ermöglicht, oder wenigstens vereinfacht. Vorzugsweise ist die Verbindungsform als Feder ausgeführt, welche in eine entsprechende Nut der Eingriffschale eingebracht wird. Die Ablaufform kann dabei in einfacher Weise als Vertiefung und/ oder Nut, innerhalb der Verbindungsform eingebracht sein. Dabei ist die als Vertiefung ausgeführte Ablaufform in Richtung der Oberseite des Ladesteckverbinder ausgerichtet.

Eine weitere Ausführungsform sieht vor, dass die Ablaufform mit einer an der Eingriffschale angeordneten Eingriffsform interagiert. Die beispielsweise als Feder ausgeführte Ablaufform greift vorzugsweise also in eine, geschickter Weise als Nut oder nutähnliche Vertiefung ausgeführte Eingriffsform ein.

In einer vorteilhaften Ausführungsform bildet die Ablaufform mit der Eingriffsform einen Fluidkanal. Mit anderen Worten beschrieben kann besonders eine als Feder ausgeführte Verbindungsform mit darin in Richtung der Oberseite des Steckverbinders weisende, nutähnliche Vertiefung in eine, vorzugsweise als Nut ausgeführte Eingriffsform der Eingriffschale ragen. Hierdurch wird zusätzlich zur formschlüssigen Verbindung zwischen Verbindungsschale und Eingriffschale ein Mittel geschaffen, Fremdmedien, insbesondere Spritzwasser und Regenwasser, welche in das Gehäuse eindringen könnten, umgehen abzuleiten. Die Ablaufform fungiert also in Verbindung mit der Eingriffsform ähnlich dem Prinzip einer Dachrinne, beziehungsweise Regenrinne.

Eine weiterentwickelte Ausführungsform schlägt vor, dass der Fluidkanal an einer Oberseite des Ladesteckverbinders angeordnet ist. Auf diese

Weise kann besonders ein sinnvoller Schutz vor Regen geschaffen werden. Möglicherweise kann diese Ausführungsform auch eine manuelle Autowäsche des damit in Verbindung gebrachten Fahrzeugs ermöglicht werden.

Besonders geschickt ist dabei eine Ausführungsform, welche den Fluidkanal innerhalb des Gehäuses ausgebildet vorschlägt. Dadurch wird zunächst eine erste Fremdmedienblockade durch die Interaktion von der Verbindungsform mit der Eingriffsform erreicht. Sollte dann dennoch ein Fluid, wie Regenwasser, durch diese Fremdmedienblockade gelangt, kann es durch die innenliegende Ablaufform aufgefangen und abgeleitet werden.

In einer cleveren Ausführungsform bildet das Gehäuse kabelseitig einen angeformten Biegeschutz aus. Diese Ausführungsform ermöglicht eine besonders preiswerte, aber dennoch vorteilhafte Herstellung des Gehäuses, da keine hochpräzise Formung eines Gewindes, beispielsweise für externe Zugentlastungen, wie im Stand der Technik bekannte Kabelverschraubungen benötigt ist. Dennoch wird durch einen Biegeschutz die Isolierung der Leitung bei einem üblichen Einsatz derart geschont, dass keine übermäßige Belastung auf die Isolierung, sowie die innenliegenden Stromleitungen und Datenleitungen wirkt. Vorzugsweise ist der Biegeschutz dabei als in das Gehäuse weisender Trichter ausgeführt.

Eine sinnvolle Ausführungsform sieht vor, dass der Fluidkanal zumindest einen als Durchgangsöffnung ausgeführten Ablass zu dem Biegeschutz weisend ausbildet. Diese Ausführungsform ermöglicht insbesondere einen unproblematischen Ablauf in der Ablaufform gesammelten Fluide aus dem Gehäuse. Dabei ist der Ablass besonders bevorzugt konisch in Richtung der Leitung ausgeformt.

In einer erfolgsversprechenden Ausführungsform bildet der Biegeschutz weiterhin einen zweiten Ablass in Richtung Unterseite des Gehäuses weisend aus. Der zweite Ablass wird dabei vorzugsweise an dem Ende des Biegeschutzes angeformt, welcher dem Steckbereich am nächsten ist. Auf diese Weise kann bei einem Ladesteckverbinder, welcher nach unten gerichtet ist, beispielsweise während einer Lagerung abseits eines Ladevorgangs, sich sammelndes Wasser innerhalb des trichterförmigen Biegeschutzes abgeführt werden.

Eine montagefreundliche Ausführungsform sieht vor, dass das Gehäuse aus zumindest einem Steckbereich, einer Verbindungsschale und einer Eingriffschale gebildet ist. Die somit zumindest dreiteilige Ausführungsform des Gehäuses ermöglicht eine weiter verbesserte Montagefreundlichkeit, sowie Wartungsfreundlichkeit. Auch Ausführungen mit zweiteiligem Steckbereich sind denkbar und aus dem Stand der Technik bekannt. Damit ist gemeint, dass ein Steckbereich einen reversibel befestigten Kontaktbereich aufweist, sodass bei Beschädigung oder Verschleiß nur dieser Bereich getauscht werden kann.

Der Steckbereich weist in einer findigen Ausführungsform einen Steckbereicheingriff auf, in welcher je eine Schalenverbindung der Verbindungsschale und der Eingriffschale formschlüssig eingreift. Besonders geschickt ist dabei eine Ausführungsform, deren Steckbereicheingriff als etwa L-förmige, umlaufende Ausformung ausgeführt ist. Dabei weist ein erster Schenkel des L-förmigen Steckbereicheingriffs im Wesentlichen parallel zu einer Steckrichtung. Der zweite Schenkel des L-förmigen Steckbereicheingriffs weist grundsätzlich rechtwinklig vom ersten Schenkel nach außen. Der Steckbereicheingriff fungiert dadurch seinerseits als fluidabweisende Ablaufform. Die Schalenverbindungen der Verbindungsschale und der Eingriffschale greifen dabei vorzugsweise in diese L-Form ein. Dabei kann die Schalenverbindung in einfacher Weise als nach innen gerichtete, rechtwinklig zur Steckrichtung ausgerichtete Anformung ausgeführt sein.

Schließlich sieht eine Ausführungsform vor, dass sich der Fluidkanal zumindest über 50% einer Länge der Oberseite des Ladesteckverbinders erstreckt. Durch diese Ausführung kann also insbesondere ein Bereich des Steckverbinders mit der erfindungsgemäßen Ablaufform versehen sein, welcher die Kontakte und die von der Isolierung getrennten Stromleitungen und Datenleitungen, aufnimmt. Besonders bevorzugt sind hierbei Ausführungen, deren Verbindungsschale über 80% ihrer Länge über eine Ablaufform aufweist. Ganz besonders bevorzugt ist eine Ausführungsform, deren Ablaufform sich über 95% der Länge der Oberseite der Verbindungsschale erstreckt. Je nach Ausführung des Steckbereichs würden somit 60% bis 90% der Oberseite des Ladesteckverbinders mit dem erfindungsgemäßen Fluidkanal geschützt.

Eine weitere Aufgabe der Erfindung wird gelöst durch ein Verbindungssystem bestehend aus zwei Ladeschnittstellen und einem Ladekabel, wobei zumindest eine Ladeschnittstelle als erfindungsgemäßer Ladesteckverbinder ausgeführt ist.

Abschließend wird eine Aufgabe der Erfindung gelöst durch ein Ladesystem bestehend aus einer Energieversorgungsschnittstelle, zwei Ladeschnittstellen, einem Ladekabel und einer Energieaufnahmeschnittstelle, vorzugsweise an einem zumindest teilweise elektrisch betriebenen Fahrzeug angeordnet, wobei zumindest eine Ladeschnittstelle als erfindungsgemäßer Ladesteckverbinder ausgeführt ist.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines Ladesteckverbinders mit geöffnetem Gehäuse;
- Fig. 2: Einen montierten Ladesteckverbinder in einer Schnittansicht entlang der Längsachse;
- Fig. 3: Eine perspektivische Ansicht einer erfindungsgemäße Verbindungsschale;
- Fig. 4: Eine perspektivische Darstellung eines Ladesteckverbinders in einer Schnittansicht quer zur Längsachse.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein. Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

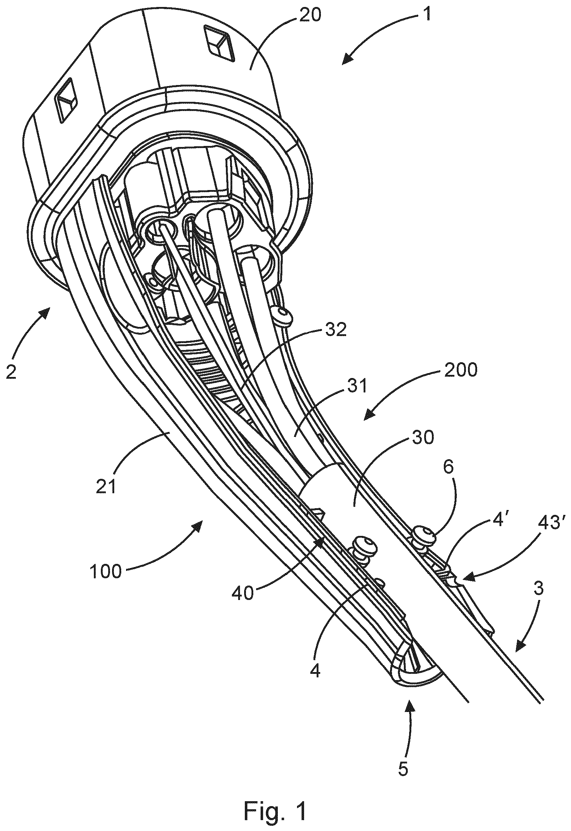

Die Figur 1 zeigt einen Ladesteckverbinder 1 in einer perspektivischen Ansicht. Dabei wird ein Teil des Gehäuses 2 zum besseren Verständnis zunächst nicht gezeigt. Das Gehäuse 2 ist in der gezeigten Ausführungsform zunächst nur mit einem Steckbereich 20 und einer Verbindungsschale 21 dargestellt. Der Ladesteckverbinder 1 weist eine Oberseite 100 und eine Unterseite 200 auf. Die Verbindungsschale 21 bildet einen verbindenden Teil des Gehäuses 2 zwischen dem Steckbereich 20 und einer Leitung 3. Die Leitung 3 ist aufgebaut mit einer umgebenden Isolierung 30. In der Isolierung 30 sind fünf Ladeleitungen 31 eingefasst. Je nach Art des Ladesteckverbinders sind mehr oder weniger Ladeleitungen denkbar. Die gezeigte Ausführungsform weist weiterhin eine Datenleitung 32 auf. Auch hier sind Ausführungsformen denkbar, in denen mehr Datenleitungen eingesetzt sind. Der Verbindungschale 21 sind verschiedene Verbindungsformen 4 und 4' angeordnet, wobei die Verbindungsform 4 mit einer erfindungsgemäßen Ablaufform 40 versehen ist. Der Ladesteckverbinder 1 schließt leitungsseitig mit einem Biegeschutz 5 ab. Dieser Biegeschutz 5 weist geschickter Weise einen Ablass 43' auf.

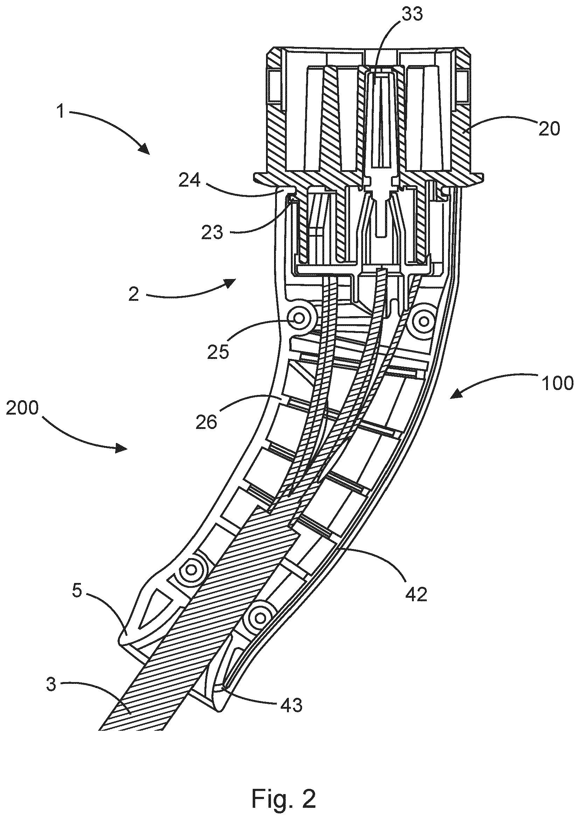

Figur 2 zeigt einen Ladesteckverbinder 1 in einer Schnittansicht entlang seiner Längsachse. Dabei wird neben dem Aufbau des Gehäuses 2 ein möglicher Aufbau des Steckbereichs 20, sowie der Verbindungsschale 21 und der Eingriffschale 22 gezeigt. Die Eingriffschale 22 weist dabei eine Eingriffsform 41 auf, welche als Stufe ausgeführt ist. Gegen eine innenliegende Stufe der Eingriffsform 41 stößt die Verbindungsform 4 mit einer daran angeordneten Ablaufkante 44. Die Ablaufkante 44 ist als Wandung der Ablaufform 40 ausgeführt. Die Ablaufform 40 bildet mit der Eingriffsform 41 einen Fluidkanal 42. Der Fluidkanal 42 endet an einem Biegeschutz 5 des Gehäuses 2 mit einem Ablass 43. Sowohl die Verbindungsschale 21, als auch die Eingriffschale 22 bilden steckseitig, also in Richtung des Steckbereichs 20 weisend, jeweils eine Schalenverbindung 24 aus. Diese Schalenverbindung 24 greift in eine an dem Steckbereich 20 angeordneten Steckbereicheingriff 23 ein. Zur reversiblen Befestigung der Verbindungsschale 21 mit der Eingriffschale 22 weisen beide Elemente Befestigungsformen 25 auf. Dazu können in einfacher Weise Befestigungselemente 6 wie in Fig. 1 zu erkennen eingesetzt. Dabei handelt es sich in einfacher Weise um Schrauben. Diese Befestigungselemente 6 können in eingeformte Befestigungsformen eingreifen. Also Befestigungsformen können hierbei Sacklochöffnungen, Durchgangsöffnungen, oder auch Gewinde vorgesehen werden. Auch separate Befestigungsformen der Art Gewindehülsen oder Muttern sind denkbar. Innerhalb des Gehäuses 2 sind Versteifungsformen 26 zu erkennen, welche die Struktur und Robustheit des Gehäuses 2 vorteilhaft beeinflussen. Steckseitig ist eine Ladekontakt 33 zu erkennen, welche für die Übertragung von elektrischem Strom mit einem Gegenstecckontakt ausgeführt ist.

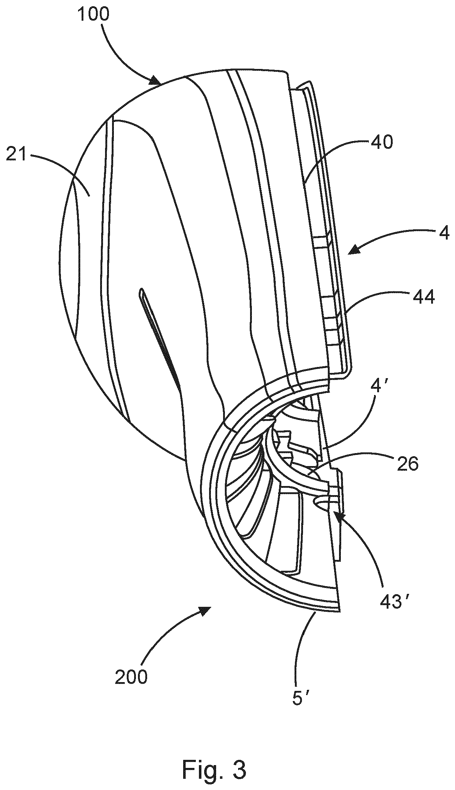

Die Figur 3 zeigt eine Verbindungsschale 21 in einer perspektivischen Ansicht von der Kabelseite in Richtung Steckbereich 20. Dabei ist eine Hälfte des Biegeschutzes 5' zu erkennen, welche in Richtung Steckbereich 20 endseitig einen zweiten Ablass 43' aufweist. Entlang der Unterseite 200 ist eine federartige Verbindungsform 4' zu erkennen. Die Verbindungsform 4, angeordnet an der Oberseite 100 der Verbindungsschale 21 weist die zuvor beschriebenen Merkmale auf. Damit sind die Ablaufform 40 und die in Richtung Eingriffschale 22 weisende Ablaufkante 44 gemeint.

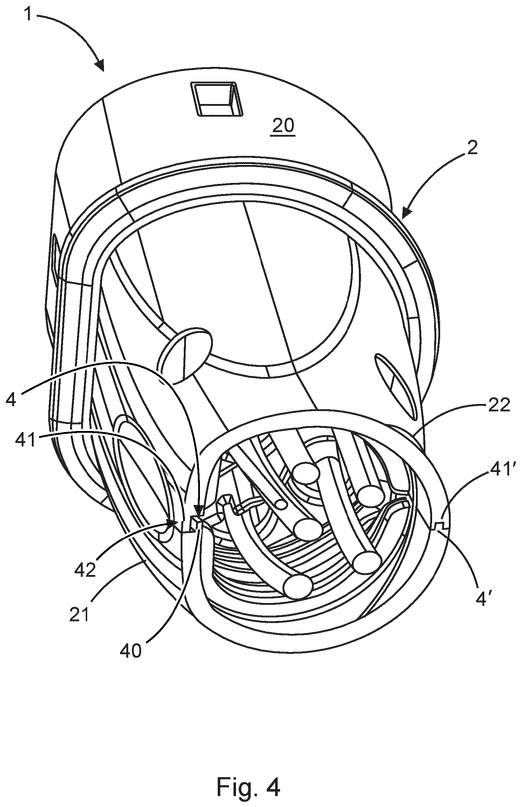

Das Zusammenspiel der Verbindungsschale 21 mit der Eingriffschale 22 wird in der Figur 4 deutlich. Hier ist zunächst zu erkennen, dass die an der Unterseite 200 angeordnete, federartige Verbindungsform 4' in die Eingriffsform 41' der Eingriffschale 22 eingreift. Schließlich wird die clevere Ausführungsform der erfindungsgemäßen Verbindungsform 4 deutlich, welche an der Oberseite 100 des Gehäuses 2 angeordnet ist. Hierbei ist stößt die Eingriffsform 41 der Eingriffschale 22 bündig vor die Verbindungsschale 21. Auf diese Weise ist eine erste Barriere gegen Fremdmedien geschaffen. Sofern diese Barriere durch Fremdmedien überwunden wird, werden diese in einem von der Eingriffsform 41 und der Ablaufform 40 gebildeten Fluidkanal 42 aufgenommen und in Richtung Biegeschutz 5 geleitet. **In** Geschickter Weise wird beim Verbinden der Verbindungsschale 21 mit der Eingriffschale 22 eine Ablaufkante 44 gegen eine untere Stufe der Eingriffsform 41 gepresst, wodurch eine weitere Dichtung zum Innenraum verstärkt wird.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Ladesteckverbinder
- 2: Gehäuse
- 20: Steckbereich
- 21: Verbindungsschale
- 22: Eingriffschale
- 23: Steckbereicheingriff
- 24: Schalenverbindung
- 25: Befestigungsform
- 26: Versteifungsform
- 3: Leitung
- 30: Isolierung
- 31: Ladeleitung
- 32: Datenleitung
- 33: Ladekontakt
- 4: Verbindungsform
- 40: Ablaufform
- 41: Eingriffsform
- 42: Fluidkanal
- 43: Ablass
- 44: Ablaufkante
- 5: Biegeschutz
- 6: Befestigungselement
- 100: Oberseite
- 200: Unterseite

## Patentansprüche

1. Ladesteckverbinder (1) für zumindest teilweise elektrisch betriebene Fahrzeuge, aufweisend ein Gehäuse (2), welches zumindest zwei Gehäuseelemente besitzt, eine Verbindungsschale (21) und eine Eingriffschale (22) und wobei das Gehäuse (2) zumindest zwei Ladekontakte (33) aufnimmt, welche Ihrerseits mit Ladeleitungen (31) einer Leitung (3) verbindbar sind,
**dadurch gekennzeichnet, dass**
zumindest der Verbindungsschale (21) eine Verbindungsform (4) angeordnet ist, wobei die Verbindungsform eine Ablaufform (40) aufweist.

2. Ladesteckverbinder (1) nach Anspruch 1
**dadurch gekennzeichnet, dass**
die Ablaufform (40) in eine, an der Eingriffschale (22) angeordneten Eingriffsform (41) eingreift.

3. Ladesteckverbinder (1) nach einem der vorstehenden Ansprüche
**dadurch gekennzeichnet, dass**
die Ablaufform (40) mit der Eingriffsform (41) einen Fluidkanal (42) bildet.

4. Ladesteckverbinder (1) nach einem der vorstehenden Ansprüche
**dadurch gekennzeichnet, dass**
der Fluidkanal (42) an einer Oberseite (100) des Ladesteckverbinders (1) angeordnet ist.

5. Ladesteckverbinder (1) nach einem der vorstehenden Ansprüche
**dadurch gekennzeichnet, dass**
der Fluidkanal (42) innerhalb des Gehäuses (2) ausgebildet ist.

6. Ladesteckverbinder (1) nach einem der vorstehenden Ansprüche **dadurch gekennzeichnet, dass**
das Gehäuse (2) kabelseitig einen angeformten Biegeschutz (5) ausbildet.

7. Ladesteckverbinder (1) nach einem der vorstehenden Ansprüche **dadurch gekennzeichnet, dass**
der Fluidkanal (42) zumindest einen als Durchgangsöffnung ausgeführten Ablass (43) zu dem Biegeschutz (5) weisend ausbildet.

8. Ladesteckverbinder (1) nach einem der vorstehenden Ansprüche **dadurch gekennzeichnet, dass**
der Biegeschutz (5) weiterhin einen zweiten Ablass (43') in Richtung Unterseite (200) weisend ausbildet.

9. Ladesteckverbinder (1) nach einem der vorstehenden Ansprüche **dadurch gekennzeichnet, dass**
das Gehäuse (2) aus zumindest einem Steckbereich (20), einer Verbindungsschale (21) und einer Eingriffschale (22) gebildet ist.

10. Ladesteckverbinder (1) nach einem der vorstehenden Ansprüche **dadurch gekennzeichnet, dass**
der Steckbereich (20) einen Steckbereicheingriff (23) aufweist, in welcher je eine Schalenverbindung (24) der Verbindungsschale (21) und der Eingriffschale (22) formschlüssig eingreift.

11. Ladesteckverbinder (1) nach einem der vorstehenden Ansprüche **dadurch gekennzeichnet, dass**
sich der Fluidkanal (42) zumindest über 50% einer Länge der Oberseite (100) des Ladesteckverbinders (1) erstreckt.

12. Verbindungssystem bestehend aus zwei Ladeschnittstellen und einem Ladekabel, wobei zumindest eine Ladeschnittstelle als Ladesteckverbinder (1) gemäß Anspruch 1 ausgeführt ist.

13. Ladesystem bestehend aus einer Energieversorgungsschnittstelle, zwei Ladeschnittstellen, einem Ladekabel und einer Energieaufnahmeschnittstelle, vorzugsweise an einem zumindest teilweise elektrisch betriebenen Fahrzeug angeordnet, wobei zumindest eine Ladeschnittstelle als Ladesteckverbinder (1) gemäß Anspruch 1 ausgeführt ist.
